# DEMANDE DE BREVET EUROPEEN

(11) **EP 1 221 402 A1**
(43) Date de publication de la demande: **10.07.2002**
(21) Numéro de dépôt: 01403374.0
(22) Date de dépôt: 27.12.2001
(51) Int. Cl.: B62B 3/00, B05B 13/02

(54) **Chariot mobile servant de support a des pièces devant faire l'object d'un traitement de surface**

(30) Priorité: 03.01.2001 FR 0100197
(71) Demandeur: Allart, Elysé, 28260 Le Mesnil Simon (FR); Allart, Jean-Baptiste, 28260 Le Mesnil Simon (FR); Allart, Matthieu, 28260 Le Mesnil Simon (FR)
(72) Inventeur: Allart, Elysé, 28260 Le Mesnil Simon (FR)
(74) Mandataire: Thibon-Littaye, Annick

(57) **Abrégé**

L'invention concerne un chariot mobile servant de support à des pièces devant faire l'objet d'un traitement de surface, comprenant un piètement à géométrie variable (1) de stabilisation dudit chariot, avantageusement monté sur des moyens de roulement (15, 16, 5), une potence constituée d'une colonne verticale (2) autour de laquelle s'engagent au moins deux éléments tubulaires (6) mobiles verticalement sur ladite colonne (2) et pouvant pivoter autour de l'axe de ladite colonne (2). Chaque élément tubulaire est muni de moyens porte-outils (8). Le chariot comporte avantageusement des moyens de protection (11) qui s'engagent autour de la colonne (2), protégeant ladite colonne (2) des projections de peinture qui, une fois séchées, empêcheraient la mobilité des éléments tubulaires (6) autour de la colonne (2) ou le long de la colonne (2).

## Description

La présente invention concerne un chariot mobile servant de support à des pièces devant faire l'objet d'un traitement de surface. Elle concerne plus particulièrement, mais non exclusivement, les chariots mobiles utilisés pour suspendre des pièces de carrosserie en vue de les apprêter et de les peindre.

D'une manière générale, on sait qu'habituellement les pièces de carrosserie à peindre sont posées sur des tréteaux et doivent être tournées afin que l'opérateur puisse les peindre sur leurs deux faces opposées. Il s'avère que l'utilisation de ces tréteaux comme moyen de support horizontal implique une position particulière du peintre qui doit nécessairement avoir le dos courbé, penché en avant pour répandre la peinture sur la totalité de la surface de la pièce. En conséquence, en fin de journée, le peintre est fréquemment sujet à des douleurs dorsales ou lombaires.

Certains dispositifs ont été imaginés pour permettre au peintre de travailler tout en adoptant une position droite et relaxante en vue de soulager la colonne vertébrale.

Ainsi, il existe des supports permettant de maintenir des objets à peindre, où ils sont positionnés suivant un axe vertical au niveau souhaité par le peintre. De tels supports sont par exemple décrits dans le document de brevet allemand DE 296 008 89. Le support décrit dans ce document autorise également la rotation de l'objet maintenu autour de l'axe vertical susmentionné et autour de l'axe de la pièce de maintien de l'objet qui se trouve être perpendiculaire à l'axe vertical, ce qui permet au peintre d'incliner l'objet à peindre selon son désir.

Un tel dispositif présente cependant l'inconvénient de n'autoriser le peintre qu'à travailler sur une seule face ou partie de l'objet. En effet, l'objet est maintenu sur le support par l'une de ses faces. Pour peindre la face par laquelle l'objet est maintenu au support, le peintre doit démonter l'objet du support et le refixer par sa face peinte. Un tel dispositif nécessite donc de retourner la pièce de carrosserie afin de peindre ses deux côtés, et ceci implique une manipulation des parties préalablement poncées, voire même fraîchement peintes de la susdite pièce, pouvant créer ainsi des défauts qui altèrent l'aspect esthétique de la surface peinte.

Par ailleurs, un tel dispositif présente l'inconvénient de ne pas pouvoir y suspendre toutes sortes de pièces. En effet, la répartition du poids des pièces autour de l'axe vertical doit être réalisée de telle sorte que le dispositif ne soit pas déséquilibré. Par exemple, une pièce à traiter dont le poids n'est pas uniformément réparti sur son ensemble devra être suspendue sur le dispositif de telle manière que la partie de la pièce la plus lourde soit placée au-dessus du piètement du dispositif. De même, si le peintre désire suspendre plusieurs pièces sur un tel dispositif, il doit impérativement placer les pièces autour de l'axe vertical en tenant compte de leur poids respectif, pour ne pas déséquilibrer le dispositif.

L'invention permet de supprimer ces inconvénients.

Elle propose à cet effet un chariot mobile servant de support à des pièces devant faire l'objet d'un traitement de surface comprenant un piètement à géométrie variable de stabilisation dudit chariot avantageusement monté sur des moyens de roulement, une potence constituée d'une colonne verticale autour de laquelle s'engagent au moins deux éléments tubulaires mobiles verticalement sur ladite colonne et pouvant pivoter autour de l'axe de ladite colonne, chaque élément tubulaire comportant des moyens porte-outils. On comprendra par moyens porte-outils un dispositif ou une pièce dont le rôle est de soutenir un objet.

Le piètement à géométrie variable permet de changer la forme du polygone de sustentation autour de la potence, autrement dit de changer les positions des points d'appui du piètement au sol. De cette manière, les pièces à traiter peuvent être disposées autour de la potence du chariot en adaptant la forme du polygone de sustentation en fonction du poids et de la forme de ces pièces, de sorte que la projection du centre de gravité de l'ensemble des pièces se trouve à l'intérieur du polygone de sustentation pour que le chariot reste équilibré.

Selon un mode de réalisation préféré, le chariot de l'invention comporte également des éléments supports de pièces devant faire l'objet d'un traitement de surface, se fixant au moins dans l'un desdits éléments porte-outils. Les éléments supports sont notamment constitués de pièces montées en rotation les unes par rapport aux autres, autorisant le basculement ou le pivotement des objets, ou pièces à peindre, qu'ils supportent.

Pour permettre au peintre de positionner les éléments tubulaires à hauteur désirée, le chariot selon l'invention comporte des moyens prévus pour assurer le maintien en hauteur des éléments tubulaires sur la colonne. Ces moyens de maintien en hauteur sont avantageusement des éléments de maintien qui sont préférentiellement de forme tubulaire pour s'engager autour de la colonne. Ils se positionnent au-dessous des éléments tubulaires et se fixent préférentiellement sur la colonne au moyen d'une vis à tête moletée. D'une manière générale, les éléments de maintien autorisent l'utilisateur du chariot à faire tourner les éléments tubulaires autour de la colonne sans changer leur position en hauteur sur la colonne.

Des moyens de blocage sont également prévus afin de bloquer les éléments tubulaires en position angulaire autour de la colonne. Ces moyens de blocage sont préférentiellement constitués par des vis de pression à tête moletée venant se visser dans des perçages taraudés, ménagés à cet effet dans les éléments tubulaires, jusqu'à buter contre la colonne verticale.

Ainsi, les éléments tubulaires étant positionnables en hauteur et pouvant être maintenus en position angulaire sur la colonne, le chariot selon l'invention autorise le peintre à travailler à hauteur d'homme et sans avoir à se déplacer autour du chariot, en lui évitant ainsi notamment l'inconfort d'une position courbée.

Selon un mode de réalisation préféré de l'invention qui sera décrit ultérieurement, les éléments tubulaires sont munis de moyens porte-outils. Avantageusement, les éléments tubulaires peuvent pivoter les uns par rapport aux autres autour de l'axe de la colonne verticale et les moyens porte-outils sont solidaires des éléments tubulaires.

De plus, les moyens porte-outils sont préférentiellement de forme tubulaire de manière à pouvoir y monter mobile en rotation une partie d'un élément support.

La possibilité de faire pivoter les éléments supports selon un angle de trois cent soixante degrés permet de ne plus manipuler la pièce de carrosserie pour, par exemple, peindre le côté opposé à celui qui vient d'être peint. II convient alors d'orienter la pièce par rapport au chariot afin que la surface à peindre se situe dans le champ d'action du peintre.

Grâce à la mobilité des éléments tubulaires autour de la colonne indépendamment les uns des autres, les moyens porte-outils ainsi que les éléments supports sont également libres d'être disposés indépendamment les uns des autres autour de la colonne.

Selon un mode de réalisation avantageux qui sera présenté ultérieurement, les moyens porte-outils comportent des moyens de blocage des éléments supports.

Selon une variante de réalisation préférée du chariot selon l'invention, les moyens porte-outils se composent de quatre branches tubulaires perpendiculaires entre-elles faisant saillie à l'élément tubulaire. Selon cette variante de réalisation, chacune des quatre branches est creuse et est munie d'un perçage taraudé de manière à pouvoir y introduire une vis à tête moletée. La vis à tête moletée permet de fixer dans chacune des quatre branches un élément support sur lequel l'opérateur viendra suspendre la pièce à traiter.

Pour permettre au peintre de ne pas avoir à démonter du chariot une pièce pour y traiter une partie à laquelle il n'a pas accès, les éléments supports sont, selon un mode de réalisation avantageux de l'invention, mobiles en rotation autour de l'axe de la branche de l'élément support dans laquelle ils sont montés. Pour ce faire, chaque élément support comporte avantageusement un bras de fixation à placer préférentiellement à l'intérieur de l'une des quatre branches creuses du porte-outil et avantageusement, ils comportent des pièces mobiles les unes par rapport aux autres.

Des modes de réalisation préférés de supports seront décrits par la suite.

Concernant le piètement à géométrie variable du chariot selon l'invention, il peut être adapté en fonction de la forme, du poids de la pièce à peindre et / ou de l'espace disponible dans lequel est disposé le chariot. A cet effet, le piètement est constitué de deux bras parallèles dont deux extrémités coudées respectives sont reliées par un élément de liaison transversal au centre duquel est fixée la colonne de la potence. Avantageusement, les deux extrémités des bras sont montées libres en rotation autour de l'élément de liaison transversal.

Pour ce faire, l'élément de liaison transversal pourra comprendre au moins deux tronçons tubulaires coaxiaux autour desquels s'engage chacune des deux extrémités des bras parallèles et autour desquels ces extrémités sont mobiles en rotation. De cette manière, ledit piètement peut passer d'une position en U à une position en S pour stabiliser le chariot quand il est utilisé, et les bras du piètement peuvent être positionnés dans le même plan que celui de la colonne pour ranger le chariot quand il n'est pas utilisé. Bien entendu, des moyens de blocage sont en outre prévus pour fixer le piètement du chariot dans la position choisie. Préférentiellement, le blocage est assuré par des goupilles passant au travers de perçages réalisés dans les bras du piètement et dans l'élément de liaison.

Ainsi, il est possible de déplacer le centre de gravité de l'ensemble constitué par le chariot et la pièce à peindre, permettant de conférer en toutes circonstances à cet ensemble une stabilité optimale. De plus, le piètement du chariot pouvant passer d'une position de travail à une position de rangement ou de repos, le chariot se range facilement et permet de libérer un espace de travail au peintre quand il n'est pas utilisé.

Dans le cadre d'un mode de réalisation avantageux de l'invention, le chariot mobile comporte, au moins sur les parties de la colonne verticale non-recouvertes, des moyens de protection étirables en longueur. On comprendra par partie non-recouverte toute partie de la colonne qui n'est pas cachée par un élément tubulaire. Ces moyens de protection préviennent des éventuelles projections de peinture sur la colonne qui, inévitablement, empêcheraient la mobilité des éléments tubulaires sur la colonne une fois la peinture séchée.

Ces moyens de protection sont engagés autour de la colonne et sont préférentiellement constitués par des soufflets de protection coaxiaux à la colonne. Préférentiellement, les soufflets sont maintenus par leurs extrémités au moyen de deux colliers de maintien se fixant respectivement sur un des éléments de maintien en hauteur des éléments tubulaires et sur un élément tubulaire supplémentaire s'engageant autour de la colonne.

Par ses différentes caractéristiques, telles qu'elles ont été succinctement définies ci-avant ou qu'elles seront plus loin définies, décrites et illustrées, et telles qu'elles peuvent être avantageusement mises en oeuvre dans la pratique industrielle, séparément ou en chacune de leurs combinaisons techniquement opérantes, l'invention permet notamment à un peintre ou à un opérateur de positionner les pièces à traiter non seulement à hauteur désirée, mais également de les incliner, de les faire pivoter autour de l'axe de la colonne et de les retourner facilement pour travailler sur toutes les parties de la pièce sans avoir à les démonter.

De plus, le piètement à géométrie variable du chariot lui confère une très bonne stabilité, ce qui permet au peintre de ne pas se soucier du poids ou de la forme des pièces lorsqu'il les suspend sur la potence du chariot. Enfin, le chariot selon l'invention peut également être rangé dans un espace réduit, ce qui permet un gain de place dans un atelier.

Un mode de réalisation préféré de l'invention va maintenant être décrit, à titre d'exemple non limitatif, en faisant référence aux dessins annexés dans lesquels :
- la figure 1 représente une vue en perspective du mode de réalisation préféré du chariot selon l'invention ;
- la figure 2 illustre une vue éclatée en perspective du piètement du chariot ;
- la figure 3 illustre une vue en perspective d'un support de roulement à monter sur le piètement illustré en figure 2 ;
- la figure 4 représente une vue en perspective des parties constitutives d'un roulement du chariot ;
- la figure 5 est un agrandissement d'une partie du piètement représenté en figure 2 ;
- la figure 6 représente une vue en perspective du chariot représenté en figure 1 avec son piètement mis sous forme de S ;
- la figure 7 représente une vue en perspective du chariot représenté en figure 1 avec son piètement mis en position de repos ou de rangement ;
- la figure 8 illustre une vue en perspective d'un élément tubulaire du chariot représenté en figure 1, ainsi que d'un élément de maintien tubulaire et un élément tubulaire supplémentaire où se fixe l'une des extrémités d'un élément de protection ;
- la figure 9 est un agrandissement d'une partie de la figure 1 représentant le positionnement d'un collier de maintien autour de l'une des extrémités d'un élément de protection ;
- la figure 10 illustre le collier de maintien fermé en vue de dessus ;
- la figure 11 montre le chariot de la figure 1 sur lequel sont montés deux sortes d'éléments supports ;
- la figure 12 représente le chariot de la figure 1 sur lequel est monté une troisième sorte d'élément support ;
- et la figure 13 est une vue en perspective d'une partie du chariot représenté sur la figure 1, sur lequel est suspendue une pièce ou un objet à traiter par l'intermédiaire d'une quatrième sorte d'élément support.

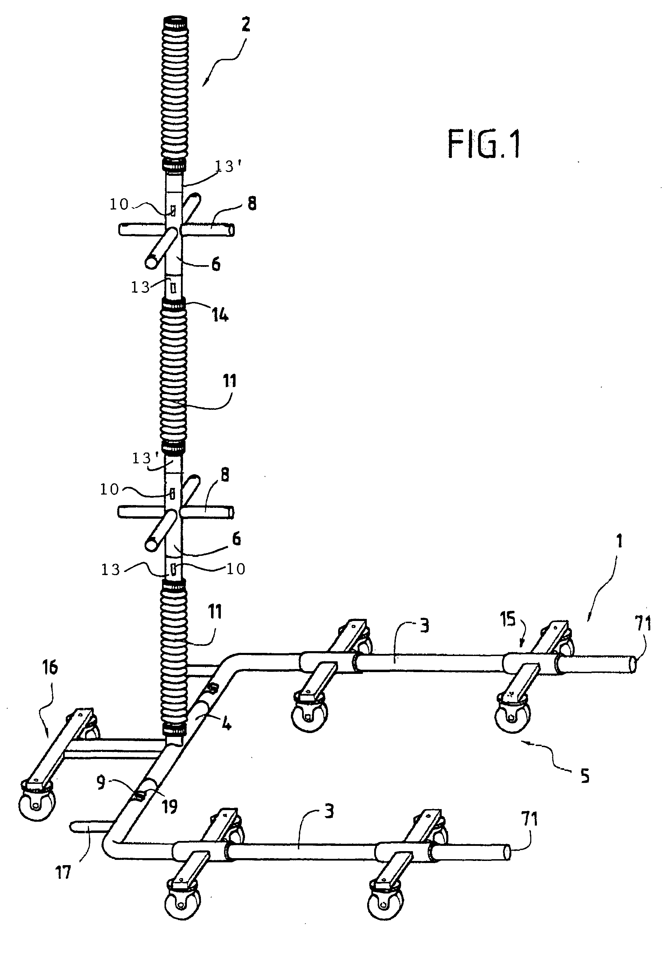

La figure 1 représente un chariot mobile servant de support à des pièces devant faire l'objet d'un traitement de surface, selon un mode de réalisation préféré de l'invention qui va maintenant être décrit.

Comme le montre la figure 1, le chariot comprend un piètement à géométrie variable 1 de stabilisation, avantageusement monté sur des premiers moyens de roulement 15, 5. Il comprend également une potence constituée d'une colonne verticale 2 autour de laquelle s'engagent deux éléments tubulaires 6, mobiles verticalement sur la colonne 2 et pouvant pivoter autour de l'axe de la colonne 2. Chaque élément tubulaire 6 comporte des moyens porte-outils 8.

Comme il est représenté sur la figure 1, le piètement 1 est également monté sur des seconds moyens de roulement 16, 5.

De plus, selon ce mode de réalisation préféré de l'invention, le chariot comporte des moyens de protection 11, étirables en longueur, dont le rôle est de cacher des parties de la colonne 2 qui ne sont pas susceptibles d'être recouvertes pas les éléments tubulaires 6. De cette manière, les projections de peinture, ou autres matières liquides, qui surviennent lors du traitement des pièces suspendues au chariot, se trouvent arrêtées par les moyens de protection 11 engagés autour de la colonne 2. Ainsi, le positionnement vertical et angulaire des éléments tubulaires 6 sur la colonne 2 ne peut pas être gêné par des résidus de peinture séchée.

Comme le montrent les figures 1, 6, 7, 11 et 12, chaque moyen de protection est préférentiellement constitué par un soufflet 11 qui sera décrit par la suite.

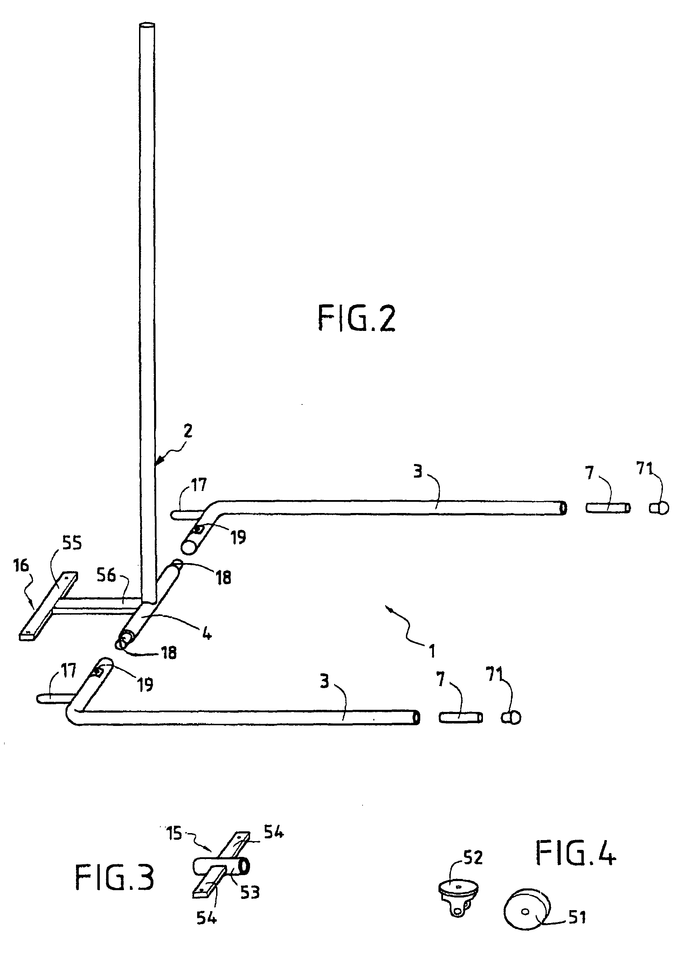

Chacun des éléments que comporte le chariot selon ce mode de réalisation préféré va maintenant être détaillé en faisant référence aux figures 2, 3, 4 et 5.

Comme il est représenté sur la figure 2, le piètement 1 du chariot comprend deux bras parallèles tubulaires 3 recourbés chacun à une extrémité, ainsi qu'un manchon tubulaire central 4 sur lequel est fixée la colonne 2.

Le manchon central 4 comporte à ces deux extrémités des tronçons tubulaires coaxiaux 18 autour desquels viennent s'emboîter les extrémités recourbées des deux bras 3.

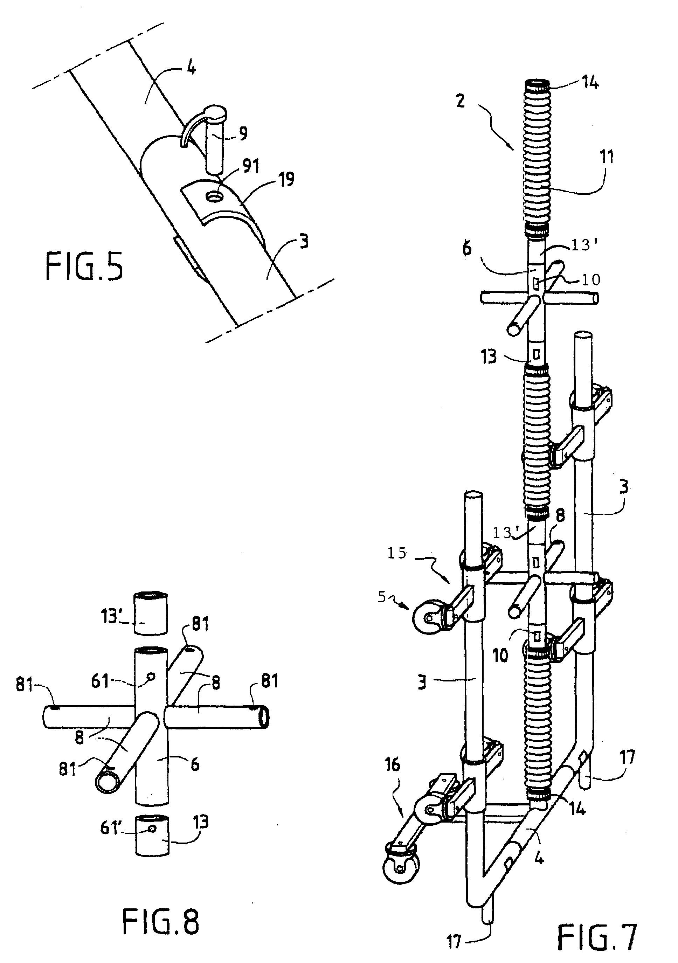

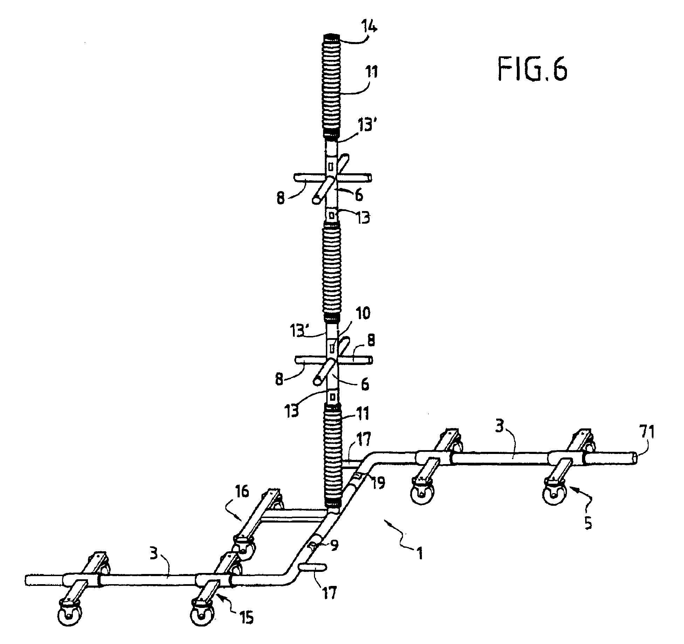

Comme il est représenté sur la figure 5, le blocage en rotation des bras 3 autour du manchon 4 est obtenu au moyen de goupilles 9 passant au travers de perçages 91 réalisés dans des zones d'emboîtement 19 des bras 3, dans les bras 3 ainsi que dans les tronçons tubulaires coaxiaux 18. Avantageusement, les zones d'emboîtement 19 sont définies par des bourrelets semi-cylindriques réalisés en saillie des bras 3, comme le montre la figure 5.

Grâce à la rotation des bras 3 autour des tronçons tubulaires coaxiaux 18 du manchon 4, le piètement du chariot selon la présente invention peut prendre différentes formes.

D'une part, le piètement du chariot peut se présenter sous une forme en U, comme il est représenté en figure 1, ou bien se présenter sous une forme en S, comme il est représenté en figure 6. Cette variation possible de la forme du piètement assure une stabilité du chariot quelle que soit la répartition des pièces suspendue autour de la colonne 2.

D'autre part, comme il est représenté en figure 7, les deux bras 3 peuvent être rabattus dans le même plan que la colonne 2 pour faire passer le chariot d'une position d'utilisation à une position de repos. Cette position de repos permet un gain de place autour du chariot lorsqu'il n'est pas utilisé pour, par exemple, le ranger dans un coin de l'atelier.

Pour une bonne stabilité du piètement, un contrepoids 7 est introduit dans chacune des extrémités non-recourbées des bras 3, et chaque extrémité non-recourbée est fermée par un bouchon 71, comme il est représenté en figure 2.

De plus, chacun des deux bras 3 comporte sur son extrémité recourbée un pied de maintien 17. Chacun des pieds de maintien 17 est avantageusement constitué par un tube cylindrique, solidaire de l'extrémité recourbée de chacun des bras 3, et son axe est parallèle à chacun des bras 3. De cette manière, lorsque le chariot n'est pas utilisé et que le piètement 1 est en position de repos (figure 7), autrement dit lorsque les bras 3 du piètement 1 se trouvent positionnés dans le même plan que la colonne 2, le chariot est maintenu debout sur le sol au moins en partie par les pieds 17.

Selon le mode de réalisé préféré représenté sur la figure 1, et comme il a été exposé précédemment, le piètement du chariot est monté sur des premiers moyens de roulement 15, 5 et des seconds moyens de roulement 16, 5.

Les premiers moyens de roulement 15, 5 comportent chacun un support de roulement 15 représenté en figure 3, et deux roulements 5. Les roulements 5 comportent chacun une roue 51 montée en rotation sur un système d'attelage 52, la roue 51 et le système d'attelage 52 étant représentés en figure 4. Chaque support de roulement 15 est constitué d'un tube central creux 53 et de deux ailes transversales 54 s'étendant de part et d'autre du tube dans un même plan, sur lesquelles sont montés les deux roulements 5. Chacun des deux systèmes d'attelage 52, muni d'une roue 51, est avantageusement monté libre en rotation sur une extrémité de chacune des ailes 54 du support de roulement 15. De cette manière, les roulements 5 peuvent pivoter à trois cent soixante degrés autour de l'axe suivant lequel ils sont montés sur les supports de roulement 15.

Le tube central creux 53 du support de roulement 15 est réalisé de telle manière qu'il s'engage autour d'un bras 3 et est libre en rotation autour du bras 3. Pour ce faire, le diamètre intérieur du tube central creux 53 est supérieur au diamètre extérieur des bras 3. Comme le montre la figure 1, le piètement 1 comprend avantageusement sur chacun des bras 3 deux supports de roulements 15 munis chacun de deux roulements 5 et disposés de manière symétrique sur chacun des bras 3.

Les seconds moyens de roulement 16, 5 sont constitués par un support de roulement supplémentaire 16 disposé à l'opposé des bras 3 par rapport au manchon 4. Le support de roulement supplémentaire 16 comporte notamment une aile 55 aux extrémités de laquelle sont montés deux roulements 5 et dont le centre est relié au centre du manchon 4 par un bras 56 se trouvant parallèle aux bras 3 et dont la direction est opposée à celle des bras 3 par rapport au manchon 4 (figure 2). Avantageusement, les roulements 5 du support 16 sont identiques à ceux dont sont munis les supports de roulement 15 engagés autour des bras 3.

Les seconds moyens de roulement 16, 5 présentent une double fonction pour le piètement du chariot selon l'invention. D'une part, ils favorisent la stabilité du piètement, notamment lorsqu'il est positionné en U, et d'autre part ils permettent de déplacer le chariot lorsque le piètement est en position de repos, autrement dit lorsque les bras 3 sont disposés dans le même plan que celui de la colonne 2, en le faisant rouler, par exemple, d'un lieu de rangement à un lieu de travail.

Avantageusement, la longueur des pieds 17, dont sont munis les extrémités recourbées des bras 3 du piètement 1, est égale à la hauteur des roulements 5 des seconds moyens de roulement 16, 5, pour assurer l'équilibre du chariot en position de repos.

Les moyens dont dispose le chariot selon l'invention pour suspendre les pièces à traiter autour de la colonne 2 vont maintenant être décrits, en faisant références aux figures 8 à 13.

Selon l'invention et tel qu'il a été précédemment exposé, le chariot comporte deux éléments tubulaires 6 qui s'engagent autour de la colonne 2, tels que représentés en figure 8. Les éléments tubulaires 6 sont mobiles en translation le long de la colonne 2 et sont également mobiles en rotation autour de la colonne 2.

Chacun des éléments tubulaires 6 est maintenu à une hauteur choisie par l'opérateur sur la colonne 2 au moyen d'un élément de maintien 13. Comme il est représenté en figure 8, l'élément de maintien 13 est de forme tubulaire pour s'engager autour de la colonne 2. Il se positionne au-dessous de l'élément tubulaire 6 et se fixe sur la colonne 2 par une vis de pression à tête moletée 10 traversant un perçage taraudé 61' ménagé à cet effet dans l'élément de maintien 13. De cette manière, une fois l'élément de maintien 13 positionné en hauteur et fixé sur la colonne 2, la hauteur de l'élément tubulaire 6 est fixée et l'élément tubulaire 6 est libre en rotation autour de la colonne 2.

Une vis de pression à tête moletée 10 permet de fixer chaque élément tubulaire 6 dans la position angulaire choisie par l'opérateur autour de la colonne 2 (voir figures 1, 5, 6, 11 et 12). Elle est vissée à l'intérieur d'un perçage taraudé 61, ménagé dans chaque élément tubulaire 6 (figure 8), jusqu'à buter contre la colonne 2.

De cette manière, l'utilisateur du chariot a le choix de laisser un élément tubulaire 6 libre en rotation autour de la colonne 2, ou bien le fixer dans une position angulaire sur la colonne 2.

Comme il est représenté en figure 8, les éléments tubulaires 6 comportent chacun quatre traverses 8 ayant une fonction de porte-outil. En effet, comme il sera ultérieurement expliqué, un élément support sera fixé dans une ou plusieurs traverses 8, et cet élément support maintiendra les pièces à peindre.

Les traverses, ou porte-outils 8, sont préférentiellement de forme tubulaire et se trouvent en saillie de l'élément tubulaire 6. Les quatre porte-outils 8 sont avantageusement solidaires de l'élément tubulaire 6 et sont uniformément répartis autour de lui. Avantageusement, les axes des porte-outils sont perpendiculaires entre eux et sont également perpendiculaires à l'axe de l'élément tubulaire 6.

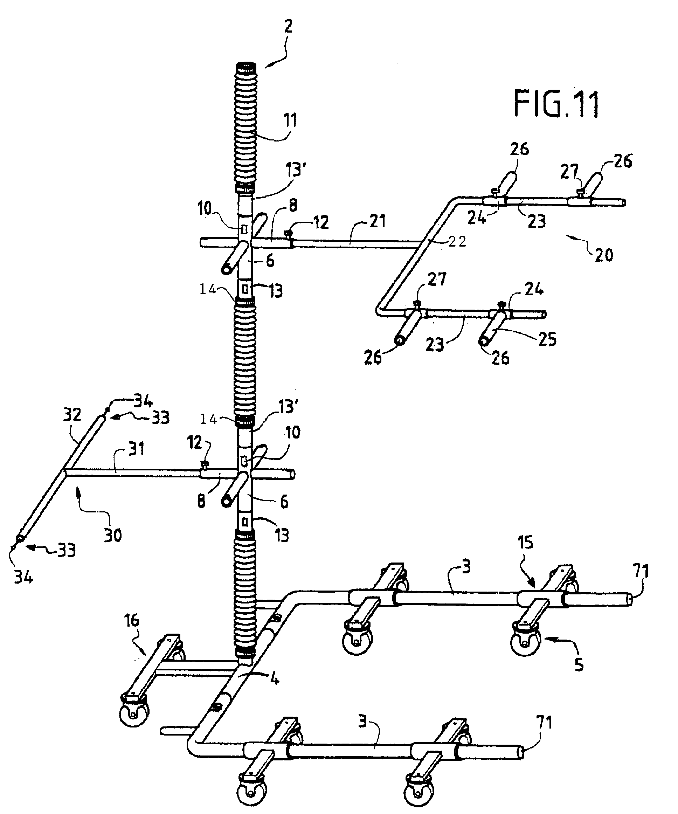

Un perçage taraudé 81 est ménagé dans chaque porte-outil 8 de manière à pouvoir y introduire une vis à tête moletée 12. La vis à tête moletée 12 permet de fixer dans chacun des porte-outils 8 un élément support sur lequel les pièces à peindre seront maintenues, comme il est représenté sur les figures 11, 12 et 13.

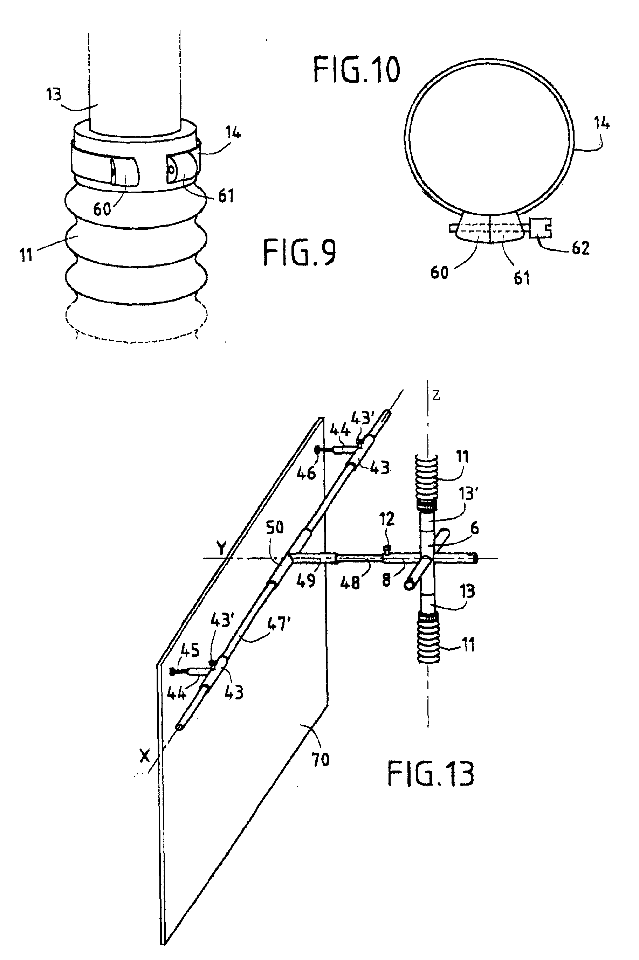

Comme il est par exemple représenté aux figures 1 et 9, les moyens de protection 11 de la colonne 2 sont constitués par des soufflets 11 étirables en longueur, engagés autour de la colonne 2. Les deux extrémités des soufflets 11 sont fixées respectivement sur un élément de maintien 13 et sur un élément tubulaire supplémentaire 13', représenté par exemple en figure 8.

L'élément tubulaire supplémentaire 13' est avantageusement engagé autour de la colonne 2 au-dessus de l'élément tubulaire 6. Il est libre en rotation autour de la colonne 2 et il est également libre en translation le long de la colonne 2. De cette manière, quand l'opérateur déplace un élément de maintien 13 le long de la colonne 2, il déplace non seulement un élément tubulaire 6, mais également l'élément tubulaire supplémentaire 13'. De cette manière, le soufflet 11 est étiré en longueur, ou bien comprimé, et protège toujours les parties de la colonne susceptibles de ne pas être recouvertes par l'un des éléments tubulaires 6.

Pour fixer les extrémités des moyens de protection 11, ou soufflets 11, respectivement sur un élément de maintien 13 et sur un élément tubulaire supplémentaire 13', des colliers de maintien 14 sont placés autour de chacune des extrémités du soufflet 11, comme il est représenté en figure 9. Chaque collier de maintien 14 est constitué d'un bandeau aux extrémités duquel se trouvent deux têtes 63 et 64 dans chacune desquelles est ménagé un perçage taraudé. Pour fermer le collier 14 et ainsi fixer les extrémités du soufflet 11, une vis 62 traverse les perçages taraudés de chacune des têtes 63 et 64 du collier 14, comme il est représenté en figure 10.

Comme le montre par exemple la figure 1, le soufflet 11 positionné autour de la colonne et le plus près du piètement 1 est fixé respectivement à un élément de maintien 13 et autour de la colonne 2 au voisinage du piètement 1. En effet, l'extrémité du soufflet se trouvant au voisinage du piètement 1 ne nécessite pas d'être fixé à un élément tubulaire supplémentaire 13' puisque cette extrémité du soufflet n'a pas à être montée mobile en translation sur la colonne 2.

Il en est de même pour le soufflet 11 positionné le plus près de l'extrémité haute de la colonne 2. Ce soufflet présente une extrémité fixée à un élément tubulaire supplémentaire 13' et une extrémité fixée autour de la colonne 2, au voisinage de l'extrémité haute de la colonne 2.

Des modes de réalisation préférés d'éléments supports pouvant être maintenus dans les porte-outils 8 vont maintenant être décrits, en faisant références aux figures 11, 12 et 13.

Comme il est représenté sur la figure 11, un premier élément support 20 comprend un support tubulaire coudé en forme de fourche horizontale. Le support tubulaire comprend une âme centrale 22, deux branches parallèles 23 solidaires de l'âme centrale 22, ainsi qu'un bras de fixation 21 qui est également solidaire de l'âme centrale 22 et qui s'étend parallèlement aux deux branches 23, à l'opposé de celles-ci par rapport à l'âme centrale 22. Le bras de fixation 21 de l'élément support 20 s'engage dans un des porte-outils 8 et s'y fixe en vissant une vis de pression 12 dans le perçage taraudé 81 comme il est représenté sur la figure 11.

Sur les branches 23, des manchons tubulaires 24 sont montés coulissants. Chaque manchon tubulaire 24 porte une tige transversale 25 dont l'extrémité est équipée d'un aimant permanent 26. Le blocage des manchons 24 est également assuré au moyen d'une vis pointeau à tête moletée 27 venant se visser dans des orifices taraudés prévus dans les manchons 24. Les pièces à peindre de nature métallique sont maintenues sur l'élément support 20 grâce aux aimants permanents 26.

Le second élément support 30 représenté sur la figure 11 présente la forme d'un T. II comporte ainsi un bras de fixation 31 venant s'engager télescopiquement dans un des porte-outils 8, ainsi qu'une tige 32 transversale au bras de fixation 31. La tige 32 est préférentiellement tubulaire et présente, à chacune de ses extrémités, un alésage taraudé dans lequel vient se visser une vis 33 dont la tête est constituée par un aimant permanent 34. Une pièce métallique pourra être maintenue sur l'élément support 30 grâce aux aimants permanents 34.

Les deux éléments supports 20 et 30 qui viennent d'être décrits et qui sont représentés sur la figure 11 permettent avantageusement de supporter des éléments de carrosserie métalliques tels que par exemple des ailes, et le réglage assuré par les vis permet à l'opérateur d'obtenir l'orientation qui lui convient le mieux pour effectuer son travail d'apprêt et de peinture.

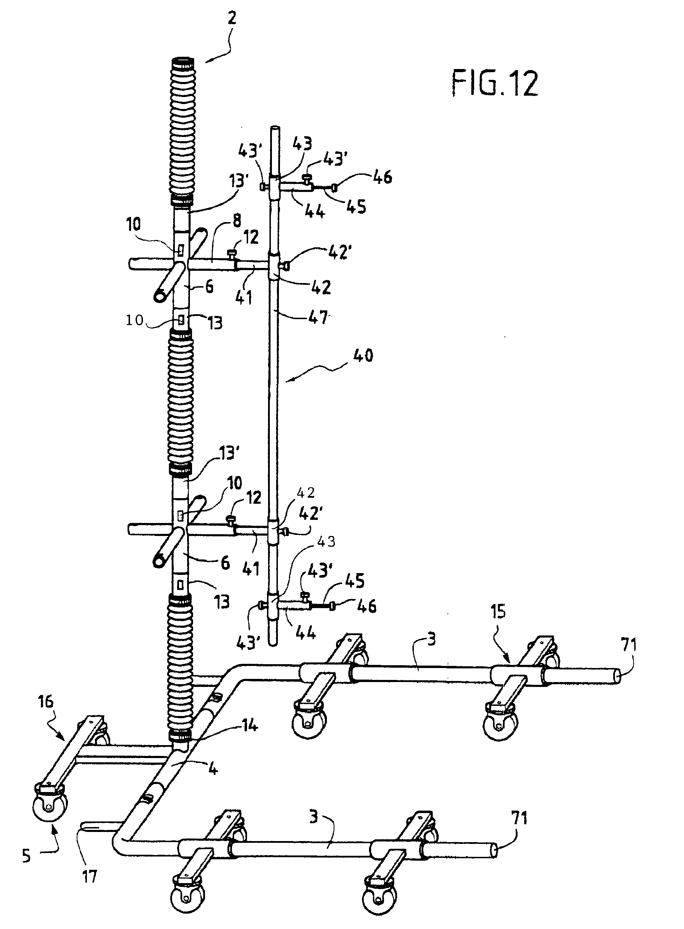

Dans l'exemple représenté sur la figure 12, un élément support 40 comporte deux manchons 42 munis chacun d'un bras de fixation 41 qui s'étend horizontalement pour venir s'engager chacun dans un porte-outil 8. Le blocage des bras 41 dans les porte-outils 8 est assuré par une vis à tête moletée 12. L'élément support 40 comporte également une tige 47 montée coulissante à l'intérieur des manchons 42 et pouvant s'y bloquer grâce à des vis à tête moletée 42', permettant son réglage en hauteur. Avantageusement, la tige 47 est montée parallèle à la colonne 2, et pour ce faire, les manchons 42 sont fixés dans deux porte-outils 8 qui se trouvent alignés dans un plan perpendiculaire au sol.

Sur la tige verticale 47, deux tronçons tubulaires 43 sont également montés coulissants. Chaque tronçon tubulaire 43 porte une traverse tubulaire 44 munie d'un orifice taraudé dans lequel vient s'engager une vis à tête moletée 43'. Le blocage des tronçons tubulaires 43 en position axiale et en rotation sur la tige 47 est également assuré au moyen de vis à tête moletée 43' venant s'engager dans des orifices taraudés prévus à cet effet dans les tronçons 43.

La fixation des pièces à peindre sur l'élément support 40 est quant à elle obtenue au moyen d'éléments de fixation tels que des aimants permanents 46 montés sur des supports 45 venant s'engager dans les traverses tubulaires 44 solidaires des tronçons 43. Les aimants 46 peuvent avantageusement être montés sur les supports 45 par l'intermédiaire de liaisons à rotule. Egalement, les supports 45 peuvent s'engager télescopiquement dans les traverses 44 permettant de disposer les aimants permanents à des distances différentes sur la surface de la pièce à maintenir.

La figure 13 illustre encore une autre sorte d'élément support sur lequel est montée une pièce à peindre ou à apprêter 70. Cet élément support comporte un manchon 50 présentant une traverse 49, solidaire du manchon 50. La traverse 49 est reliée coaxialement à un bras de fixation 48 par une liaison à rotule. La liaison à rotule autorise la traverse 49, et par là même le manchon 50, à pivoter autour de l'axe Z du bras de fixation 48. Le bras 48 est fixé dans un des porte-outils 8 au moyen d'une vis à tête moletée 12. Une tige 47' est montée libre en rotation à l'intérieur du manchon 50 et deux tronçons 43, identiques aux tronçons 43 de l'élément support 40 précédemment décrit, sont engagés autour de la tige 47' et y sont fixés grâce à des vis pointeaux à tête moletée 43'. La pièce 70 est maintenue à l'élément support grâce aux aimants permanents 46 placés respectivement à chaque extrémité des supports 45 venant s'engager dans des traverses tubulaires 44 solidaires des tronçons 43. La tige 47' étant montée libre en rotation à l'intérieur du manchon 50, la pièce 70 peut pivoter autour de l'axe X de la tige 47'.

Selon ce mode de réalisation d'élément support, la tige 47' peut également être maintenu dans le manchon 50 grâce à une vis pointeau à tête moletée vissée dans un perçage taraudé ménagé dans le manchon 50.

Dans ce mode de réalisation avantageux de l'élément support du chariot selon l'invention représenté en figure 13, la pièce qui y est maintenue est donc mobile selon trois directions : d'une part, le peintre peut régler la hauteur de la pièce en déplaçant l'ensemble de l'élément support suivant un axe vertical Z qui est celui de la colonne, puisque l'élément tubulaire 6 est mobile le long de la colonne 2 et puisque l'élément support est fixé dans un porte-outil de l'élément tubulaire 6. D'autre part, le peintre peut faire basculer la pièce autour de l'axe X de la tige qui est montée libre en rotation à l'intérieur du manchon 50, ce qui permet au peintre de pouvoir travailler aussi bien sur une face de la pièce 50, par exemple celle où les aimants permanents ne sont pas placés, que sur une autre face, par exemple celle où les aimants permanents sont placés. Enfin, le peintre peut également faire pivoter la pièce autour de l'axe Y, qui est celui du porte-outil 8 et qui est également celui du bras de fixation 48. Cela permet de peindre, par exemple, des extrémités de la pièce qui ne se trouvent pas dans le champ d'action du peintre, et ceci, sans avoir à démonter la pièce.

Une caractéristique importante des chariots précédemment décrits consiste donc en ce que les éléments supports, qui sont montés dans les porte-outils et qui maintiennent les pièces à peindre, autorisent des basculements multiples de ces pièces, en raison leurs nombreuses possibilités de pivotement. Les éléments supports représentés en figure 11 et 12 permettent également des basculements. Par exemple, l'élément support 30 représenté sur la figure 11 permet de retourner complètement une pièce fixée par l'une de ces faces au moyen des aimants permanents 34, en dévissant la vis à tête moletée 12 et en faisant tourner le bras 31 à l'intérieur du porte-outil 8, sans avoir à toucher la pièce.

Ainsi, la description qui précède explique clairement comment l'invention permet d'atteindre les objectifs qu'elle s'est fixés.

En particulier, grâce à la mobilité des éléments tubulaires 6 et des éléments supports, le chariot permet de positionner les pièces sous n'importe quel angle et à hauteur désirée, permettant ainsi au peintre de travailler dans une position confortable. Egalement, le possible basculement d'un élément support par rapport à un autre permet de faire pivoter la pièce, de manière à travailler sur plusieurs endroits de la pièce sans avoir à la démonter.

De plus, le piètement à géométrie variable permet de suspendre n'importe quelles pièces à peindre en adaptant le piètement en fonction de la disposition de leur poids autour de la colonne 2. De même, le chariot selon l'invention présente l'avantage de n'occuper qu'une faible place dans l'atelier lorsqu'il n'est pas utilisé, grâce au piètement à géométrie variable dont les bras 3 peuvent se replier dans un plan comprenant la colonne 2. Il peut alors se ranger dans le coin d'une pièce, libérant alors un espace de travail supplémentaire pour le peintre.

Il ressort néanmoins de ce qui précède que l'invention n'est pas limitée aux modes de mise en oeuvre qui ont été spécifiquement décrits et représentés sur les figures.

En effet, les aimants permanents des différents éléments supports, pris à titre d'exemples non limitatifs, pourraient tout aussi bien être remplacés par des patins enduits de matière adhésive, éventuellement repositionnables, pour maintenir des pièces non métalliques. De même, les aimants permanents pourraient être remplacés par des systèmes de fixation textile à crochets faisant intervenir d'une part une première pièce textile à crochets fixée par collage sur l'élément de carrosserie à traiter et d'autre part une seconde pièce de textile à crochets montée sur un patin solidarisé à la structure de l'un des éléments supports du chariot, par exemple à l'extrémité d'un élément support.

On pourrait également imaginer d'autres éléments supports à fixer à l'intérieur des porte-outils. Par exemple, un élément support constitué uniquement d'un bras de fixation, dont l'une des extrémités serait munie d'un aimant permanent, pourrait être monté dans l'un des porte-outils. Cet élément permettrait, par exemple, de suspendre sur le chariot des pièces de faible poids ne nécessitant pas d'être maintenues en plusieurs points de leur surface.

On pourrait également prévoir des éléments supports se fixant directement dans les pentures d'une porte ou d'une portière de voiture, de manière à peindre toute la porte en la faisant pivoter autour de ses propres pentures sur le chariot. Pour ce faire, on pourrait imaginer un élément support comprenant des gonds destinés à venir s'engager dans les pentures d'une portière de voiture.

## Revendications

1. Chariot mobile servant de support à des pièces devant faire l'objet d'un traitement de surface, comprenant un piètement à géométrie variable (1) de stabilisation dudit chariot avantageusement monté sur des moyens de roulement (15, 16, 5), une potence constituée d'une colonne verticale (2) autour de laquelle s'engagent au moins deux éléments tubulaires (6) mobiles verticalement sur ladite colonne et pouvant pivoter autour de l'axe de ladite colonne, chacun desdits éléments tubulaires (6) comportant des moyens porte-outils (8).

2. Chariot mobile selon la revendication 1, **caractérisé en ce que** ledit piètement à géométrie variable comporte deux bras parallèles (3), dont deux extrémités avantageusement coudées sont montées libres en rotation autour d'un élément de liaison transversal (4), permettant de faire passer ledit piètement d'une position en U à une position en S pour la stabilisation dudit chariot quand il est utilisé, et permettant de positionner lesdits bras (3) dans le même plan que ladite colonne (2) pour ranger ledit chariot quand il n'est pas utilisé.

3. Chariot mobile selon la revendication 2, **caractérisé en ce que** ledit piètement (1) est fixé dans une position choisie par des moyens de blocage desdites extrémités des bras (3) autour dudit élément de liaison transversale (4), préférentiellement par des goupilles (9) passant au travers de perçages (91) réalisés lesdits bras (3) et dans ledit élément de liaison (4).

4. Chariot mobile selon la revendication 2 ou 3, **caractérisé en ce que** lesdites extrémités desdits bras (3) comportent chacune un pied (17) de maintien dudit chariot, pour maintenir au moins en partie ledit chariot debout sur le sol quand lesdits bras (3) dudit piètement (1) se trouvent positionnés dans le même plan que ladite colonne (2).

5. Chariot mobile selon l'une quelconque des revendications 2 à 4, **caractérisé en ce que** ledit piètement (1) comporte des premiers moyens de roulement (15, 5) engagés autour desdits bras (3), et des seconds moyens de roulement (16, 5) disposés à l'opposé desdits bras (3) par rapport à l'élément de liaison (4), lesdits seconds moyens de roulement permettant de déplacer ledit chariot lorsque lesdits bras (3) sont disposés dans le même plan que ladite colonne (2).

6. Chariot mobile selon l'une quelconque des revendications précédentes, **caractérisé en ce qu'**il comporte des moyens de blocage desdits éléments tubulaires (6) en position axiale et/ou angulaire sur ladite colonne (2).

7. Chariot mobile selon l'une quelconque des revendications précédentes, **caractérisé en ce que** ledit chariot comporte, au moins sur des parties de ladite colonne (2) susceptibles de ne pas être recouvertes par lesdits éléments tubulaires (6), des moyens de protection (11) étirables en longueur.

8. Chariot mobile selon la revendication 7, **caractérisé en ce que** lesdits moyens de protection (11) sont maintenus par leurs extrémités au moyen de colliers de maintien (14).

9. Chariot mobile selon l'une quelconque des revendications précédentes, **caractérisé en ce que** lesdits moyens porte-outils (8) sont solidaires desdits éléments tubulaires (6) et sont avantageusement tubulaires de manière à pouvoir y monter mobile en rotation une partie d'un élément support.

10. Chariot mobile selon la revendication 9, **caractérisé en ce que** lesdits moyens porte-outils comportent des moyens de blocage (12) desdits éléments supports.

11. Chariot mobile selon l'une quelconque des revendications précédentes, **caractérisé en ce qu'**il comporte des éléments supports se fixant dans au moins dans l'un desdits éléments porte-outils (8).

12. Chariot mobile selon l'une quelconque des revendications 9, 10 ou 11, **caractérisé en ce que** lesdits éléments supports sont constitués notamment des pièces montées en rotation les unes par rapport aux autres, autorisant le basculement ou le pivotement desdites pièces sur ledit chariot.
